# EUROPEAN PATENT SPECIFICATION

(11) **EP 4 613 648 B1**
(45) Date of publication and mention of the grant of the patent: **18.11.2026**
(21) Application number: 25161989.6
(22) Date of filing: 06.03.2025
(51) Int. Cl.: B64D 27/34, B64D 27/357, B64D 33/08, B64D 27/30, B64D 33/10, B64D 27/33

(54) **EXPENDABLE HEAT SINK SYSTEM AND CONTROL**
VERBRAUCHBARES KÜHLKÖRPERSYSTEM UND STEUERUNG
SYSTÈME DE DISSIPATEUR THERMIQUE CONSOMMABLE ET COMMANDE

(30) Priority: 07.03.2024 US 202463562358 P
(43) Date of publication of application: 10.09.2025
(73) Proprietor: Eaton Intelligent Power Limited, D04 Y0C2 Dublin 4 (IE)
(72) Inventor: CANTRELL, Christopher Thomas, Dublin 4, D04 Y0C2 (IE); WANG, Hongbin, Dublin 4, D04 Y0C2 (IE); HEMMINGER, Noah William, Dublin 4, D04 Y0C2 (IE)
(74) Representative: Epping - Hermann - Fischer

(56) References cited:
- WO-A1-2023/016846
- WO-A2-2023/114353
- CN-A- 108 750 123
- CN-A- 116 914 989
- US-B1- 11 613 350

## Description

### BACKGROUND

Various components within an aircraft require thermal management to operate. For example, a propeller motor and a battery powering the propeller motor both generate heat during operation and can overheat (surpass an upper temperature limit) if left uncooled. Overheating may lead to electrical fires, equipment damage, performance, or useful life degradation. Certain components, such as the battery, also may have a lower temperature limit to operate properly. Accordingly, the aircraft is equipped with a thermal management system including cooling circuits for these components.
WO 2023/114353 A2 discloses a fuel cell system configured to provide electrical power to an electrical motor producing propulsive thrust for an aircraft. The fuel cell system includes a plurality of fuel cell stacks radially arranged about a central cavity. Fuel cell plates within each of the fuel cell stacks are oriented such that major surfaces of the fuel cell plates are parallel to an airflow created by the aircraft as it moves through the air. The fuel cell system further includes a plurality of cooling devices disposed in radial cavities located between at least two fuel cell stacks in the plurality of fuel cell stacks.
CN 116 914 989 A discloses a motor cooling circuit of a vehicle comprising a heat exchanger, a motor, a refrigerant circuit and a cooling liquid circuit; the heat exchanger is provided with a refrigerant flow passage and a cooling liquid flow passage, the refrigerant flow passage is provided with a first inlet and a first outlet, and the cooling liquid flow passage is provided with a second inlet and a second outlet; the motor comprises a shell, a stator and windings; the refrigerant loop comprises a first pipeline, a compressor, a condenser, a second pipeline, an expansion valve and an evaporator; the cooling liquid loop comprises a third pipeline and a water pump.
WO 2023/016846 A1 discloses a vehicle with an electrochemical cell and two coolant circuits for cooling the electrochemical cell.
US 11 613 350 B1 discloses a VTOL aircraft including a plurality of lift propellers configured to rotated by lift motors. The lift propellers are configured to generate a cooling airflow to cool the lift motors during use.
CN 108 750 123 A discloses a thermal energy comprehensive management system suitable for a hypersonic aircraft.

### SUMMARY

Aspects of the disclosure are directed to a cooling system utilizing expendable media. In certain implementations, the cooling system can be used on an aircraft, such as a hybrid electric aircraft or electric aircraft. Other implementations are possible. The subject-matter for which protection is sought is defined by the independent claims. Developments are defined by the dependent claims.

In certain aspects, expendable media is selectively released to cool a non-expendable coolant during peak heat loads. During non-peak heat loads, the non-expendable coolant is cooled using conventional means (e.g., ambient air). Because the expendable media acts as a thermal sink during peak heat loads, the non-expendable coolant and corresponding components need only be designed to accommodate normal operating loads, leading to smaller and lighter components.

In certain aspects, a first type of coolant is circulating along a main coolant loop to cool a heat load. The first type of coolant is cooled at an air-to-liquid heat exchanger. During select periods, the first coolant is diverted to a liquid-to-liquid heat exchanger at which the first type of coolant is cooled by a second type of coolant having a greater specific heat capacity. Because the second coolant cools only the first coolant and not the heat load directly, the components forming the heat load need not be designed to handle the pressure, temperature, or other characteristics of the second coolant.

In some implementations, the first type of coolant is directed back to the cooling circuit upstream of the air-to-liquid heat exchanger. In other implementations, the first type of coolant is directed back to the cooling circuit downstream of the air-to-liquid heat exchanger.

In some implementations, the second type of coolant is vented towards the air-to-liquid heat exchanger to further cool the first type of coolant. In other implementations, the second type of coolant is vented to ambient.

### BRIEF DESCRIPTION OF THE DRAWINGS

The accompanying drawings, which are incorporated in and constitute a part of the description, illustrate several aspects of the present disclosure. A brief description of the drawings is as follows:
FIG. 1 is a schematic diagram of a cooling system configured to be supplemented by an expendable media cooling circuit, the expendable media cooling circuit being integrated with the cooling system in a first configuration to supplement cooling of an air-to-liquid heat exchanger;

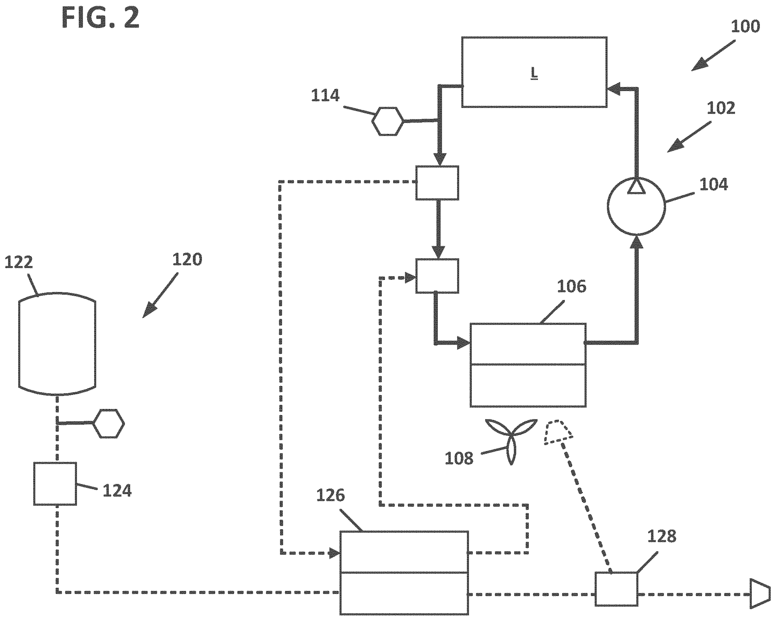

FIG. 2 shows a flow path through the cooling system of FIG. 1 during normal operation;
FIG. 3 shows a flow path through the cooling system and expendable media cooling circuit of FIG. 1 during peak heat loads;
FIG. 4 shows an optional configuration in which the expendable media is vented towards the cooling system;
FIG. 5 is a schematic diagram of a cooling system configured to be supplemented by an expendable media cooling circuit, the expendable media cooling circuit being integrated with the cooling system in a second configuration to replace the air-to-liquid heat exchanger;

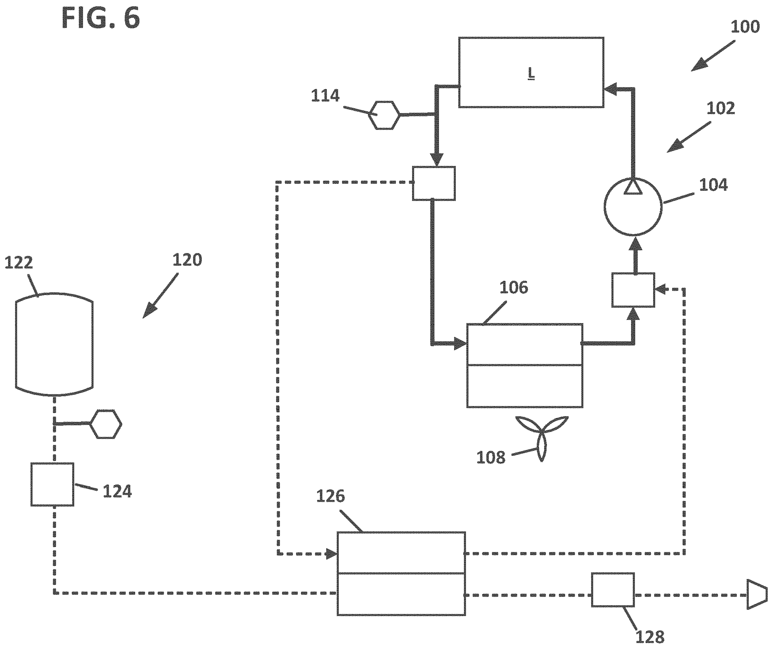

FIG. 6 shows a flow path through the cooling system of FIG. 5 during normal operation; and
FIG. 7 shows a flow path through the cooling system and expendable media cooling circuit of FIG. 5 during peak heat loads.

### DETAILED DESCRIPTION

Reference will now be made in detail to exemplary aspects of the present disclosure that are illustrated in the accompanying drawings. Wherever possible, the same reference numbers will be used throughout the drawings to refer to the same or like parts.

Referring to the figures in general, a cooling system 100 includes a main coolant loop 102 and a supplemental coolant path 120. The main coolant loop 102 is configured to circulate a first coolant past a heat load L. The main coolant loop 102 includes a coolant pump 104 and a first heat exchanger 106 (e.g., an air-to-liquid heat exchanger) at which heat is removed from the first coolant. For example, ambient air or ram air 108 may be blown over the first exchanger 106 to cool the first coolant.

The supplemental coolant path 120 includes a tank 122 and a second heat exchanger 126. In certain implementations, the second heat exchanger 126 is a liquid-to-liquid heat exchanger. As the term is used herein, a liquid-to-liquid heat exchanger cools a first liquid coolant using a second coolant that is either liquid or in a supercritical state. The tank 122 holds a second coolant EC having a specific heat capacity that is greater than the specific heat capacity of the first coolant. In other words, the second coolant is capable of absorbing a greater amount of heat than the first coolant for a given time period. The supplemental coolant path 120 includes a valve arrangement 124 to selectively release the second coolant EC from the tank 122. In some implementations, the valve arrangement 124 is located at the tank 122. In other implementations, the valve arrangement 124 is downstream of the tank 122.

In some implementations, the second coolant EC is held in a liquid state within the tank 122. In certain implementations, a valve arrangement 124 and/or a valve arrangement 128 operates to release the second coolant EC from the tank 122 and to ensure a desired phase of the second coolant EC. For example, the valve arrangement 128 controls when the second coolant EC is vented from the supplemental coolant path 120. By remaining closed, the pressure within the supplemental coolant path 120 increases, which may bring the second coolant EC to a supercritical state.

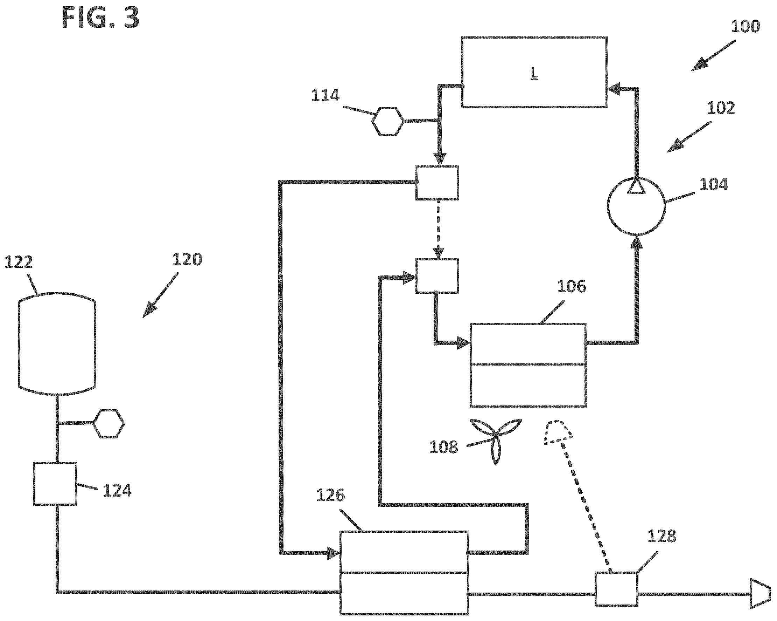

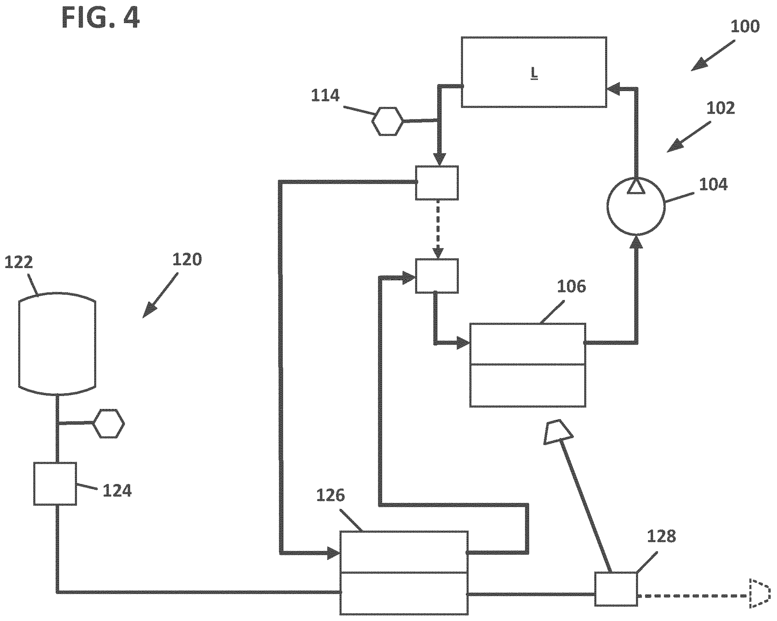

The supplemental coolant path directs the released second coolant through the second heat exchanger 126. According to the invention, the second coolant EC is vented, e.g. out of the cooling system 100, after passing through the second heat exchanger 126. For example, the valve arrangement 128 may intermittently vent the second coolant EC. In some examples, the second coolant EC is vented to ambient (e.g., see FIG. 3). In other examples, the second coolant EC is vented towards the first heat exchanger 106 to act as ram air (e.g., see FIG. 4).

A valve arrangement 110, 110' is configured to selectively route the first coolant of the main coolant loop 102 to the second heat exchanger 126 of the supplemental coolant path 120 to be cooled by the second coolant EC. The valve arrangement 110, 110' includes a first valve 111 that selectively directs the first coolant either towards the second heat exchanger 126 or towards the first heat exchanger 106. In certain implementations, the valve arrangement 110, 110' also includes a second valve 112, 112' that receives the first coolant after the first coolant has been cooled at the second heat exchanger 126. The second valve 112, 112' integrates the cooled first coolant back into the main coolant loop 102.

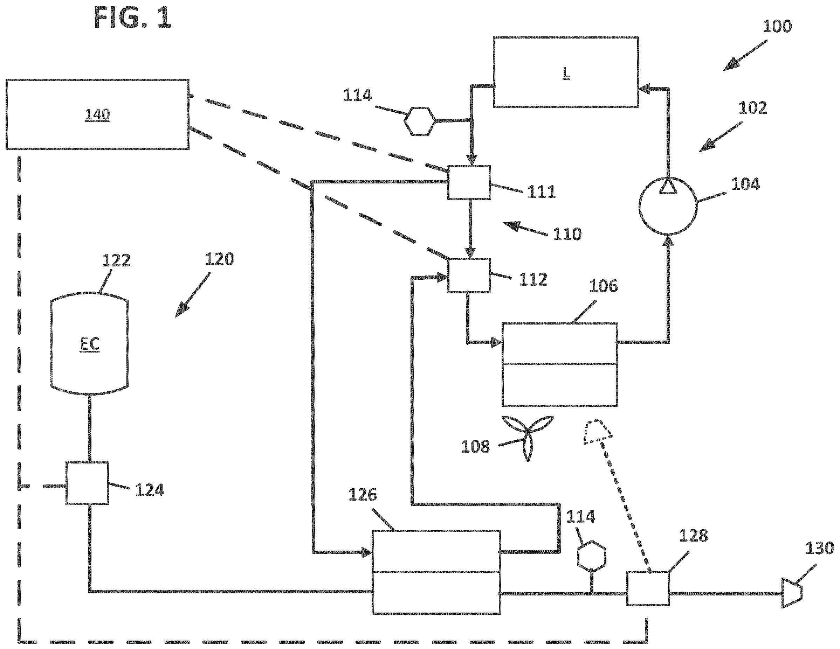

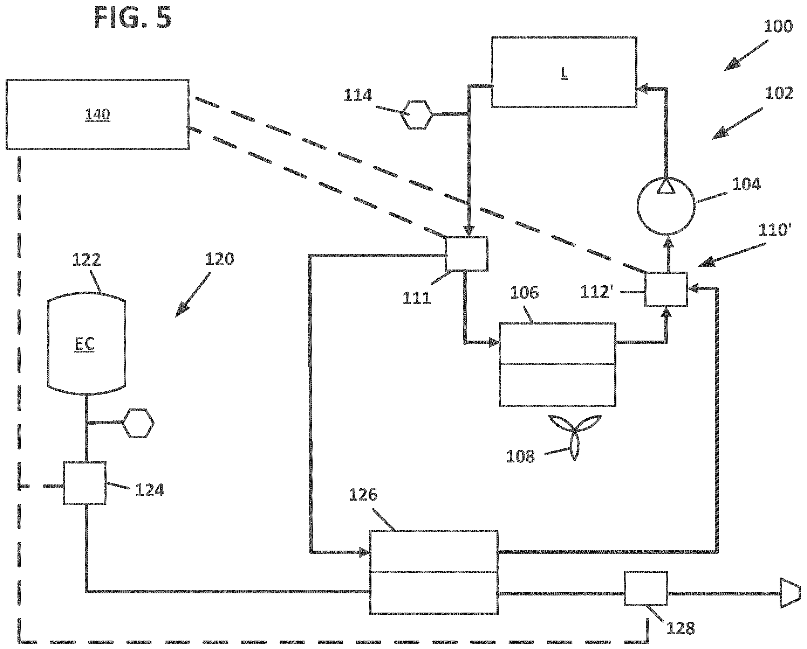

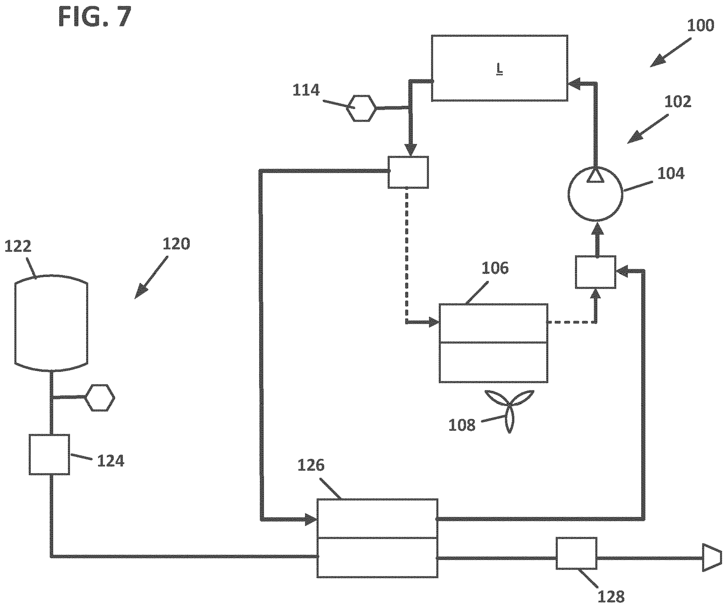

In some implementations, the second valve 112 is located upstream of the first heat exchanger 106 (e.g., see FIG. 1). In such implementations, the cooled first coolant is routed through the first heat exchanger 106 for further cooling (e.g., see FIG. 3). In other implementations, the second valve 112' is located downstream of the first heat exchanger 106 (e.g., see FIG. 5). In such implementations, the cooled first coolant bypasses the first heat exchanger 106 before heading to the heat load L (e.g., see FIG. 7). In still other implementations, the first coolant is directed back into the main coolant loop 102 without a separate valve.

Suitable examples of a first type of coolant include water, ethylene glycol, or propylene glycol. Suitable examples of a second type of coolant EC include supercritical carbon dioxide (sCO₂), liquid hydrogen (LH₂), and liquid nitrogen (LN₂). In certain implementations, the second coolant has a specific heat capacity that is substantially greater than the specific heat capacity of the first coolant. For example, the second coolant may have a specific heat capacity that is 2 times, 5 times, 10 times, 20 times, or 30 times the specific heat capacity of the first coolant at a particular temperature.

In certain implementations, the second coolant is maintained at a higher pressure than the first coolant. Accordingly, components of the main coolant loop 102 need not be built to withstand the pressure levels of the second coolant.

In certain examples, the first heat exchanger 106 has a plate/fin (PFHE) construction. In certain examples, the second heat exchanger 126 includes a stacked plate heat exchanger.

In certain implementations, a controller 140 manages operation of the valve arrangement 110. In certain examples, the controller 140 manages operation of the first valve 111 to selectively direct the first coolant towards the second heat exchanger 126. In certain examples, the controller 140 manages operation of the second valve 112, 112' that selectively releases the second coolant EC from the tank 122. In certain examples, the controller 140 manages operation of the valve arrangement 124 that selectively releases the second coolant EC from the tank 122.

In certain implementations, the controller 140 manages the operation of the valve arrangements 110, 124 based on one or more characteristics of the first and second coolants. In certain implementations, one or more sensors 114 (e.g., temperature sensor, pressure sensor, etc.) are disposed throughout the main coolant loop 102 and/or the supplemental coolant path 120. In certain examples, the controller 140 will open the valve 124 of the supplemental coolant path 120 to release the second coolant EC from the tank 122 towards the second heat exchanger 126. In certain examples, the controller 140 may configure the valve arrangement 110 to direct the first coolant towards the second heat exchanger 126 based on a temperature reading of the first coolant taken by a temperature sensor 114 along the main coolant path 102.

In some examples, the controller 140 may operate the first valve 111 to direct the first coolant towards the second heat exchanger 126 when the temperature of the first coolant exceeds a predetermined level. For example, the first coolant may be directed towards the second heat exchanger 126 when the temperature of the first coolant reaches 35 degrees Celsius, 40 degrees Celsius, 45 degrees Celsius, 50 degrees Celsius, 60 degrees Celsius, 70 degrees Celsius, 80 degrees Celsius, or 85 degrees Celsius. In other examples, the controller 140 may operate the first valve 111 to direct the coolant towards the second heat exchanger 126 when the heat load L reaches a predetermined level (e.g., 35, 40, 45, 50, 60, 70, 80, or 85 degrees Celsius).

In certain examples, the controller 140 may configure the valve arrangement 128 to direct the second coolant EC leaving the second heat exchanger 126 towards the first heat exchanger 106 when the temperature of the second coolant EC remain below a predetermined threshold and/or when the temperature of the first coolant rises above a predetermined threshold. For example, a temperature sensor 114 may be disposed downstream of the second heat exchanger 126 along the supplemental coolant path 120. If the second coolant EC leaving the second heat exchanger 126 is sufficiently cold, then the second coolant EC may be vented at the first heat exchanger 106 as ram air to further cool the first coolant. In certain examples, the second coolant EC may be vented to the first heat exchanger 106 if suitable ram air is not available (e.g., if ambient air temperatures are too high). Alternatively, if the temperature of the second coolant EC leaving the second heat exchanger 126 is too high and/or if the temperature of the first coolant is below a predetermined threshold, then the controller 140 may configure the valve arrangement 128 to vent the second coolant EC to ambient.

Having described the preferred aspects and implementations of the present disclosure, modifications within the scope of the appended claims may readily occur to one skilled in the art.

## Claims

1. A cooling system (100) comprising:
a main coolant loop (102) configured to circulate a first coolant having a first specific heat capacity, the main coolant loop (102) including a coolant pump (104) and a first heat exchanger (106), the main coolant loop (102) extending past a heat load (L);
a supplemental coolant path (120) including a tank (122) and a second heat exchanger (126), the tank (122) holding a second coolant (EC) having a second specific heat capacity that is greater than the first specific heat capacity of the first coolant, and
a valve arrangement (110, 110') configured to selectively route the first coolant of the main coolant loop (102) to the second heat exchanger (126) of the supplemental coolant path (120) to be cooled by the second coolant (EC),
**characterized in that** the second coolant (EC) is vented after flowing through the second heat exchanger (126).

2. The cooling system of claim 1, wherein the valve arrangement (110, 110') is configured to route the first coolant back to the main coolant loop (102) upstream of the first heat exchanger (106) after being cooled by the second heat exchanger (126).

3. The cooling system of claim 1, wherein the valve arrangement (110, 110') is configured to route the first coolant back to the main coolant loop (102) downstream of the first heat exchanger (106) after being cooled by the second heat exchanger (126).

4. The cooling system of any of claims 1-3, wherein the vented second coolant (EC) is directed toward the first heat exchanger (106) to cool the first coolant.

5. The cooling system of any of claims 1-4, further comprising a controller (140) configured to operate the valve arrangement (110, 110').

6. The cooling system of claim 5, wherein the controller (140) operates a valve arrangement (124) of the supplemental coolant path (120) to selectively release the second coolant (EC) to the second heat exchanger (126).

7. The cooling system of claim 5, wherein the controller (140) operates a valve arrangement (128) of the supplemental coolant path (120) to selectively vent the second coolant (EC).

8. The cooling system of any of claims 1-7, wherein the first heat exchanger (106) is an air-to-liquid heat exchanger and wherein the second heat exchanger (126) is a liquid-to-liquid heat exchanger.

9. The cooling system of claim 1, wherein
the first coolant is a non-expendable coolant;
the second coolant is an expendable coolant (EC); and
a controller (140) of the cooling system is configured to manage releasing of the expendable coolant (EC) to the second heat exchanger (126) and configured to manage redirecting the non-expendable coolant to the second heat exchanger (126).

10. A method of cooling a heat load (L) using the cooling system as claimed in any of claims 1-9, the method comprising:
circulating the first coolant between the heat load (L) and the first heat exchanger (106) along the main coolant loop (102);
determining that the first heat exchanger (106) is not sufficiently cooling the first coolant;
redirecting the first coolant to the second heat exchanger (126);
directing the second coolant (EC) to the second heat exchanger (126), the second coolant (EC) being colder than the first coolant; and
directing the first coolant back to the main coolant loop (102) for further circulation.

11. The method of claim 10, further comprising venting the second coolant (EC).

12. The method of claim 11, wherein venting the second coolant (EC) comprises venting the second coolant (EC) towards the first heat exchanger (106).

13. The method of claim 10, wherein determining that the first heat exchanger (106) is not sufficiently cooling the first coolant comprises analyzing a temperature reading of the first coolant obtained along the main coolant loop (102).

## Patentansprüche

1. Ein Kühlsystem (100), das umfasst:
einen Hauptkühlmittelkreislauf (102), der eingerichtet ist, ein erstes Kühlmittel mit einer ersten spezifischen Wärmekapazität umzuwälzen, wobei der Hauptkühlmittelkreislauf (102) eine Kühlmittelpumpe (104) und einen ersten Wärmetauscher (106) umfasst und sich der Hauptkühlmittelkreislauf (102) an einer Wärmelast (L) vorbei erstreckt;
einen Zusatzkühlmittelweg (120), der einen Tank (122) und einen zweiten Wärmetauscher (126) umfasst, wobei der Tank (122) ein zweites Kühlmittel (EC) enthält, das eine zweite spezifische Wärmekapazität aufweist, die größer ist als die erste spezifische Wärmekapazität des ersten Kühlmittels; und
eine Ventilanordnung (110, 110'), die eingerichtet ist, das erste Kühlmittel des Hauptkühlmittelkreislaufs (102) selektiv zum zweiten Wärmetauscher (126) des Zusatzkühlmittelwegs (120) zu leiten, um durch das zweite Kühlmittel (EC) gekühlt zu werden,
**dadurch gekennzeichnet, dass**
das zweite Kühlmittel (EC) nach dem Durchströmen des zweiten Wärmetauschers (126) abgelassen wird.

2. Kühlsystem nach Anspruch 1, wobei die Ventilanordnung (110, 110') eingerichtet ist, das erste Kühlmittel nach der Kühlung durch den zweiten Wärmetauscher (126) stromaufwärts des ersten Wärmetauschers (106) zurück in den Hauptkühlkreislauf (102) zu leiten.

3. Kühlsystem nach Anspruch 1, wobei die Ventilanordnung (110, 110') eingerichtet ist, das erste Kühlmittel nach der Kühlung durch den zweiten Wärmetauscher (126) stromabwärts des ersten Wärmetauschers (106) zurück in den Hauptkühlkreislauf (102) zu leiten.

4. Kühlsystem nach einem der Ansprüche 1 bis 3, wobei das abgelassene zweite Kühlmittel (EC) zum ersten Wärmetauscher (106) geleitet wird, um das erste Kühlmittel zu kühlen.

5. Kühlsystem nach einem der Ansprüche 1 bis 4, das ferner eine Steuerung (140) umfasst, die eingerichtet ist, um die Ventilanordnung (110, 110') zu betätigen.

6. Kühlsystem nach Anspruch 5, wobei die Steuerung (140) eine Ventilanordnung (124) des Zusatzkühlmittelwegs (120) betätigt, um das zweite Kühlmittel (EC) selektiv an den zweiten Wärmetauscher (126) abzugeben.

7. Kühlsystem nach Anspruch 5, wobei die Steuerung (140) eine Ventilanordnung (128) des Zusatzkühlmittelwegs (120) betätigt, um das zweite Kühlmittel (EC) selektiv abzulassen.

8. Kühlsystem nach einem der Ansprüche 1 bis 7, wobei der erste Wärmetauscher (106) ein Luft-Flüssigkeits-Wärmetauscher ist und wobei der zweite Wärmetauscher (126) ein Flüssigkeit-Flüssigkeit-Wärmetauscher ist.

9. Kühlsystem nach Anspruch 1, wobei
das erste Kühlmittel ein nicht verbrauchbares Kühlmittel ist;
das zweite Kühlmittel ein Verbrauchskühlmittel (EC) ist; und
eine Steuerung (140) des Kühlsystems eingerichtet ist, das Freisetzen des Verbrauchskühlmittels (EC) in den zweiten Wärmetauscher (126) zu steuern, und eingerichtet ist, die Umleitung des nicht verbrauchbaren Kühlmittels zum zweiten Wärmetauscher (126) zu steuern.

10. Verfahren zum Kühlen einer Wärmelast (L) unter Verwendung des Kühlsystems nach einem der Ansprüche 1 bis 9, wobei das Verfahren umfasst:
Zirkulieren des ersten Kühlmittels zwischen der Wärmelast (L) und dem ersten Wärmetauscher (106) entlang des Hauptkühlmittelkreislaufs (102);
Feststellen, dass der erste Wärmetauscher (106) das erste Kühlmittel nicht ausreichend kühlt;
Umleiten des ersten Kühlmittels zum zweiten Wärmetauscher (126);
Leiten des zweiten Kühlmittels (EC) zum zweiten Wärmetauscher (126), wobei das zweite Kühlmittel (EC) kälter ist als das erste Kühlmittel; und
Leiten des ersten Kühlmittels zurück in den Hauptkühlmittelkreislauf (102) zur weiteren Zirkulation.

11. Verfahren nach Anspruch 10, das ferner das Ablassen des zweiten Kühlmittels (EC) umfasst.

12. Verfahren nach Anspruch 11, wobei das Ablassen des zweiten Kühlmittels (EC) das Ablassen des zweiten Kühlmittels (EC) in Richtung des ersten Wärmetauschers (106) umfasst.

13. Verfahren nach Anspruch 10, wobei das Feststellen, dass der erste Wärmetauscher (106) das erste Kühlmittel nicht ausreichend kühlt, das Analysieren eines entlang des Hauptkühlmittelkreislaufs (102) ermittelten Temperaturmesswerts des ersten Kühlmittels umfasst.

## Revendications

1. Système de refroidissement (100) comprenant :
une boucle principale de fluide de refroidissement (102) configurée pour faire circuler un premier fluide de refroidissement présentant une première capacité thermique spécifique, la boucle principale de fluide de refroidissement (102) comprenant une pompe à fluide de refroidissement (104) et un premier échangeur de chaleur (106), la boucle principale de fluide de refroidissement (102) s'étendant au-delà d'une charge thermique (L) ;
un chemin de fluide de refroidissement supplémentaire (120) comprenant un réservoir (122) et un deuxième échangeur de chaleur (126), le réservoir (122) contenant un deuxième fluide de refroidissement (EC) présentant une deuxième capacité thermique spécifique supérieure à la première capacité thermique spécifique du premier fluide de refroidissement ; et
un dispositif de vannes (110, 110') configuré pour acheminer de manière sélective le premier fluide de refroidissement de la boucle principale de refroidissement (102) vers le deuxième échangeur de chaleur (126) du chemin de fluide de refroidissement supplémentaire (120) afin qu'il soit refroidi par le deuxième fluide de refroidissement (EC),
**caractérisé en ce que**
le deuxième fluide de refroidissement (EC) est évacué après avoir traversé le deuxième échangeur de chaleur (126).

2. Système de refroidissement selon la revendication 1, dans lequel le dispositif de vannes (110, 110') est configuré pour renvoyer le premier fluide de refroidissement vers la boucle principale de fluide de refroidissement (102) en amont du premier échangeur de chaleur (106) après qu'il a été refroidi par le deuxième échangeur de chaleur (126).

3. Système de refroidissement selon la revendication 1, dans lequel le dispositif de vannes (110, 110') est configuré pour renvoyer le premier fluide de refroidissement vers la boucle principale de fluide de refroidissement (102) en aval du premier échangeur de chaleur (106) après qu'il a été refroidi par le deuxième échangeur de chaleur (126).

4. Système de refroidissement selon l'une quelconque des revendications 1 à 3, dans lequel le deuxième fluide de refroidissement évacué (EC) est dirigé vers le premier échangeur de chaleur (106) afin de refroidir le premier fluide de refroidissement.

5. Système de refroidissement selon l'une quelconque des revendications 1 à 4, comprenant en outre un contrôleur (140) configuré pour actionner le dispositif de vannes (110, 110').

6. Système de refroidissement selon la revendication 5, dans lequel le contrôleur (140) commande un dispositif de vannes (124) du chemin de fluide de refroidissement supplémentaire (120) afin de diriger de manière sélective le deuxième fluide de refroidissement (EC) vers le deuxième échangeur de chaleur (126).

7. Système de refroidissement selon la revendication 5, dans lequel le contrôleur (140) commande un dispositif de vannes (128) du chemin de fluide de refroidissement supplémentaire (120) afin d´évacuer de manière sélective le deuxième fluide de refroidissement (EC).

8. Système de refroidissement selon l'une quelconque des revendications 1 à 7, dans lequel le premier échangeur de chaleur (106) est un échangeur de chaleur air-liquide et dans lequel le deuxième échangeur de chaleur (126) est un échangeur de chaleur liquide-liquide.

9. Système de refroidissement selon la revendication 1, dans lequel
le premier fluide de refroidissement est un fluide de refroidissement non consommable ;
le deuxième fluide de refroidissement est un fluide de refroidissement consommable (EC) ; et
un contrôleur (140) du système de refroidissement est configuré pour gérer l'acheminement du fluide de refroidissement consommable (EC) vers le deuxième échangeur de chaleur (126) et pour gérer la libération du fluide de refroidissement consommable (EC) vers le deuxième échangeur de chaleur (126).

10. Procédé de refroidissement d'une charge thermique (L) à l'aide du système de refroidissement selon l'une quelconque des revendications 1 à 9, le procédé comprenant :
circuler le premier fluide de refroidissement entre la charge thermique (L) et le premier échangeur de chaleur (106) le long de la boucle principale de fluide de refroidissement (102) ; déterminer que le premier échangeur de chaleur (106) ne refroidit pas suffisamment le premier fluide de refroidissement ;
rediriger le premier fluide de refroidissement vers le deuxième échangeur de chaleur (126) ;
diriger le deuxième fluide de refroidissement (EC) vers le deuxième échangeur de chaleur (126), le deuxième fluide de refroidissement (EC) étant plus froid que le premier fluide de refroidissement ; et
renvoyer le premier fluide de refroidissement vers la boucle principale de refroidissement (102) pour une circulation supplémentaire.

11. Procédé selon la revendication 10, comprenant en outre l'évacuation du deuxième fluide de refroidissement (EC).

12. Procédé selon la revendication 11, dans lequel l'évacuation du deuxième fluide de refroidissement (EC) comprend l'évacuation du deuxième fluide de refroidissement (EC) vers le premier échangeur de chaleur (106).

13. Procédé selon la revendication 10, dans lequel la détermination du fait que le premier échangeur de chaleur (106) ne refroidit pas suffisamment le premier fluide de refroidissement comprend l'analyse d'une mesure de température du premier fluide de refroidissement obtenue le long de la boucle principale de fluide de refroidissement (102).
